# FASCICULE DE BREVET EUROPEEN

(11) **EP 4 173 252 B1**
(45) Date de publication et mention de la délivrance du brevet: **20.11.2024**
(21) Numéro de dépôt: 21751828.1
(22) Date de dépôt: 23.06.2021
(51) Int. Cl.: H04L 9/40

(54) **PROCÉDÉS ET DISPOSITIFS DE CONTROLE D'ACCÈS À UN CONTENU MÉMORISÉ PAR UN SERVEUR CACHE**
VERFAHREN UND VORRICHTUNGEN ZUR STEUERUNG DES ZUGRIFFS AUF INHALT, DIE IN EINEM CACHE-SERVER GESPEICHERT WIRD
METHODS AND APPARATUSES FOR CONTROLLING ACCESS TO CONTENT STORED IN A CACHE SERVER

(30) Priorité: 26.06.2020 FR 2006709
(43) Date de publication de la demande: 03.05.2023
(73) Titulaire: Orange, 92130 Issy-les-Moulineaux (FR)
(72) Inventeur: STEPHAN, Emile, 92326 CHÂTILLON CEDEX (FR); FIEAU, Frédéric, 92326 CHÂTILLON CEDEX (FR); FROMENTOUX, Gaël, 92326 CHÂTILLON CEDEX (FR)
(74) Mandataire: Vidon Brevets & Stratégie
(86) Numéro de dépôt international: PCT/FR2021/051153
(87) Numéro de publication internationale: WO 2021/260327

(56) Documents cités:
- WO-A1-2007/111588
- US-A1- 2012 185 370
- PETERSON AKAMAI TECHNOLOGIES L ET AL: "Framework for Content Distribution Network Interconnection (CDNI); rfc7336.txt", FRAMEWORK FOR CONTENT DISTRIBUTION NETWORK INTERCONNECTION (CDNI); RFC7336.TXT, INTERNET ENGINEERING TASK FORCE, IETF; STANDARD, INTERNET SOCIETY (ISOC) 4, RUE DES FALAISES CH- 1205 GENEVA, SWITZERLAND, 13 August 2014 (2014-08-13), pages 1 - 58, XP015104428

## Description

### Domaine de l'invention

Le domaine de l'invention est celui de la livraison de contenus à au moins un terminal.

Plus particulièrement, l'invention concerne une méthode permettant de contrôler l'accès à un contenu mémorisé dans un serveur dit cache par au moins un terminal.

### Art antérieur et ses inconvénients

Un réseau de diffusion de contenu ou en anglais *content delivery network* (CDN), est constitué de terminaux et de serveurs reliés en réseau et qui coopèrent afin de mettre à disposition du contenu ou des données à des utilisateurs.

Un tel réseau de diffusion de contenu est constitué : de serveurs d'origine, d'où les contenus sont « injectés » dans le CDN pour y être répliqués, de serveurs périphériques, typiquement déployés à plusieurs endroits géographiquement distincts, où les contenus des serveurs d'origine sont répliqués ; d'un mécanisme de routage permettant à une requête d'accès à un contenu émise par un terminal d'un utilisateur d'être servie par le serveur le « plus proche », dans le but d'optimiser le mécanisme de transmission / livraison.

Le document US 2012/185370 décrit la délégation de la livraison de contenus entre réseaux de diffusion de contenu. Dans un mode de réalisation, le URI comprenant le chemin peut être chiffré avec une clé privée du réseau de diffusion de contenu veillant délégué la livraison de contenus. Une telle solution permet d'augmenter la sécurité de la livraison de contenus. Dans un autre mode de réalisation, un cookie peut être utilisé par le serveur d'origine et envoyé vers le terminal demandeur d'accès. Ce cookie peut être utilisé pour la facturation de services et pour la comptabilité.

PETERSON AKAMAI TECHNOLOGIES L ET AL: "Framework for Content Distribution Network Interconnection (CDNI); rfc7336.txt",FRAMEWORK FOR CONTENT DISTRIBUTION NETWORK INTERCONNECTION (CDNI); RFC7336.TXT, INTERNET ENGINEERING TASK FORCE, IETF, présente le placement de contenus dans un serveur cache avant qu'un terminal effectue une requête d'obtention du contenu, l'accès aux contenus peut être contrôlé par le metadata stocké dans les serveur cache par un serveur d'origine.

Afin de pouvoir contrôler l'accès au contenu par certains terminaux, une solution dite « *URL signing* » a été discutée dans le cadre d'un groupe de travail de l'IETF (*Internet Engineering Task Force*) et formalisée dans le document https://tools.ietf.org/html/draft-ietf-cdni-uri-signing-19.

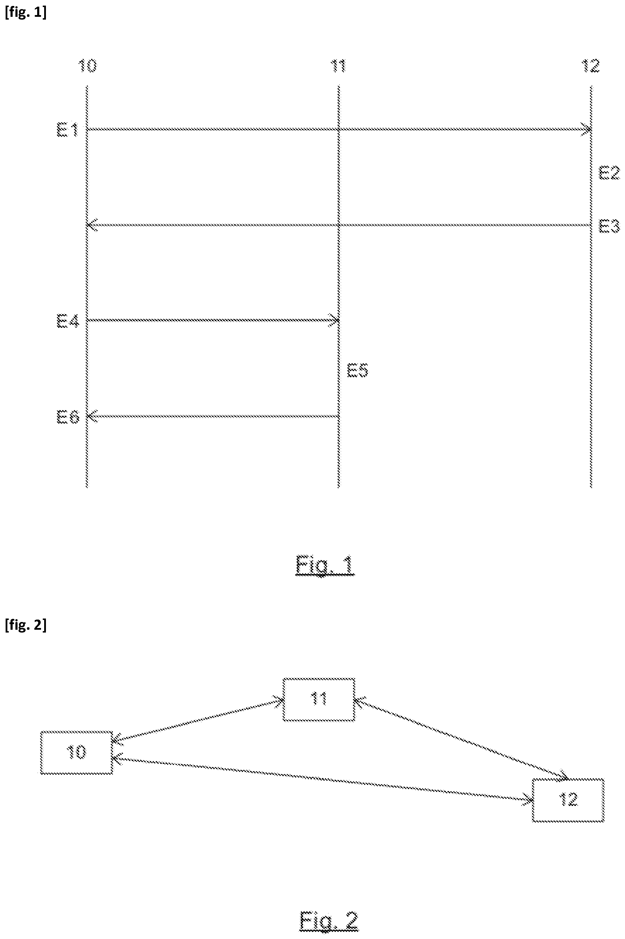

La **[****Fig. 1****]** représente diagramme d'échanges de messages entre différents terminaux contribuant à la mise en oeuvre d'une telle solution de « *URL signing* » .

Le système comprend au moins un terminal 10 requérant un accès à au moins un contenu, tel qu'une page web ou un contenu multimédia, un serveur cache 11, et au moins un serveur d'origine 12 dont l'identifiant de nommage est par exemple journal.fr, hébergeant au moins un contenu à livrer, par exemple une page web référencée *journal.fr*/*news*/*week19* et stockant des données relatives au contenu requis par le terminal 10 tel que des données relatives à la page web *journal.fr*/*news*/*week19* ou des données relatives à un contenu téléchargeable, etc.

Le terminal 10 peut échanger des messages avec le serveur cache 11 et avec le serveur d'origine 12. Un terminal 10 est un équipement pouvant émettre des requêtes pour obtenir un contenu tel qu'un ordinateur personnel, une passerelle domestique, un décodeur de télévision numérique, un smartphone, un capteur, etc.

Ainsi, dans une étape E1, le terminal 10 émet une requête pour accéder à un contenu à destination du serveur d'origine 12.

Dans une étape E2, le serveur d'origine 12 génère un identifiant de ressources URI (*Uniform Resource Identifier* en anglais pour identifiant uniforme de ressource) associé au contenu requis et au terminal 10 requérant. Cet identifiant de ressources URI comprend des informations supplémentaires permettant de contrôler l'accès à ce contenu par le terminal 10 comme par exemple une clé cryptographique.

Au cours d'une étape E3, le serveur d'origine 12 transmet un message à destination du terminal 10 comprenant l'identifiant de ressource généré au cours de l'étape E2.

La réception du message transmis par le serveur d'origine 12 au cours de l'étape E3 déclenche, dans une étape E4, une étape de transmission par le terminal 10 d'une requête d'accès au contenu requis à destination d'un serveur cache 11 dans lequel le contenu requis est mémorisé. La requête d'accès ainsi transmise comprend les informations supplémentaires permettant de contrôler l'accès au contenu requis. L'étape E4 équivaut à une redirection d'une requête d'accès à un contenu à destination du serveur d'origine vers le serveur cache 11. En effet, d'un point de vue protocolaire, la requête pour accéder au contenu émise par le terminal 10 au cours de l'étape E1 à destination du serveur autoritaire est redirigée vers le serveur cache 11 au cours de l'étape E4. En effet, bien que les deux requêtes considérées aient un contenu différent, la deuxième requête comprenant les informations supplémentaires permettant de contrôler l'accès au contenu requis, elles sont perçues, d'un point de vue protocolaire, comme une seule et même requête relative à l'accès d'un même contenu par un même terminal 10.

A réception de la requête d'accès au contenu comprenant les informations supplémentaires permettant de contrôler l'accès au contenu requis, le serveur cache 11 vérifie, dans une étape E5, l'authenticité de la requête d'accès au contenu au moyen des informations supplémentaires permettant de contrôler l'accès au contenu requis comprises dans la requête et au moyens d'informations relatives au droit d'accès au contenu requis préalablement fournis par le serveur d'origine 12 au serveur cache 11.

Lorsque l'authenticité de la requête d'accès au contenu est vérifiée, le serveur cache 11 livre le contenu au terminal 10 au cours d'une étape E6.

Une telle solution dite « *URL signing* » nécessite la disponibilité du serveur d'origine au moment de la requête afin qu'une connexion soit établie entre le terminal 10 et le serveur d'origine 12 puisque la requête d'accès au contenu reçue par le serveur cache 11 disposant du contenu requis correspond à une redirection de la requête d'accès initiale transmise par le terminal 10 à destination du serveur d'origine 12.

Du fait de cette contrainte, cette solution de « *URL signing* » est peu adaptée aux exigences de la norme 5G (ou 5^{ème} génération de standards pour la téléphonie mobile) notamment en terme de temps de traitement des échanges du fait de la redirection de la requête d'accès initiale.

Un autre inconvénient de cette solution de « *URL signing* » réside dans l'augmentation de la charge pour le domaine hébergeant le serveur d'origine du contenu lorsque le contenu requis est demandé par un grand nombre d'utilisateurs. En effet, plus un contenu est téléchargé, plus le nombre de requêtes d'accès au contenu émises à destination du serveur d'origine 12 augmente. Or les domaines hébergeant des serveurs d'origine de contenus, ayant délégué la livraison de ces contenus à des réseaux de livraison de contenus ne sont pas toujours dimensionnés pour gérer une charge substantielle.

Il existe donc un besoin d'une technique de contrôle d'accès à un contenu ne présentant pas tout ou partie de ces inconvénients.

### Exposé de l'invention

L'invention répond à ce besoin en proposant un procédé d'accès à au moins un contenu, ledit procédé étant mis en oeuvre par un terminal, dans un réseau de diffusion de contenu comprenant au moins ledit terminal, un serveur d'origine (12) et le serveur cache (11), le procédé comprenant :
une première phase comprenant les étapes suivantes de :
- émission d'une demande d'autorisation d'accès audit au moins un contenu à destination d'un serveur d'origine associé audit contenu,
- réception d'un fichier comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins ladite autorisation d'accès audit contenu , le fichier étant délivré par le serveur d'origine, une deuxième phase comprenant les étapes suivantes de :
   - émission d'une demande d'accès audit contenu à destination d'un serveur dit cache dans lequel ledit contenu est mémorisé,
   - transmission du fichier comprenant ladite autorisation d'accès à destination du serveur cache,
   - réception du contenu transmis par le serveur cache lorsque l'authenticité du fichier est vérifiée par le serveur cache .

Un tel procédé d'accès à un contenu mis en oeuvre par un serveur cache permet de s'affranchir de l'existence d'une connexion entre un terminal requérant un contenu et le serveur d'origine associé au contenu requis. Il est entendu par contenu, un contenu spécifique ou un ensemble de contenus situés sur des branches d'une même URL (Uniform Resource Locator). Par exemple un identifiant de nommage journal1.fr/news est commun aux deux contenus respectivement référencés journal1.fr/news/week19 et journal1.fr/news/week20.

De plus, un tel procédé d'accès à un contenu permet de déplacer la charge induite au niveau du domaine hébergeant le serveur d'origine associé à ce contenu par une augmentation du nombre de demandes d'accès à un contenu donné vers un réseau de livraison de contenus puisque le traitement des demandes d'accès au contenu par le serveur d'origine associé au contenu requis puis le contrôle de l'autorisation par le serveur cache situé dans un réseau de livraison de contenus ne sont plus synchrones. En effet, ces deux actions peuvent être décorrélées dans le temps.

En effet, dans la présente solution, au cours d'une première phase, le terminal se voit fournir par un serveur d'origine associé au contenu requis un fichier comprenant une autorisation d'accès audit contenu. La fourniture de ce fichier par le serveur d'origine est déclenchée par la réception, par le serveur d'origine, d'une demande d'autorisation d'accès à un contenu donné. Une fois le fichier fourni, il n'est plus nécessaire de maintenir une connexion entre le terminal et le serveur d'origine..

Au cours d'une deuxième phase, qui peut être mise en oeuvre consécutivement à la première phase ou bien plusieurs heures ou jours plus tard, un utilisateur du terminal souhaite effectivement accéder au contenu. Pour cela, le terminal transmet une demande d'accès au contenu requis à destination d'un serveur cache, dont un identifiant peut être fourni au terminal par le serveur d'origine, dans lequel le contenu requis est mémorisé. Le serveur cache réalise alors le contrôle d'accès au contenu au moyen du fichier comprenant une autorisation d'accès audit contenu fourni par le terminal et que ce dernier a reçu du serveur d'origine associé au contenu requis et lorsqu'il est vérifié que l'autorisation d'accès est authentique, le serveur cache livre le contenu au terminal.

Cela permet en outre d'augmenter le niveau de fiabilité de la vérification de l'authenticité de l'autorisation d'accès du terminal. En effet, en ayant accès à l'intégralité des échanges intervenus entre le terminal et le serveur d'origine, le serveur cache est dans la capacité de s'assurer de l'authenticité et de l'intégrité de ces derniers.

Selon une caractéristique particulière du procédé d'accès à un contenu, l'étape de réception du contenu consiste en un rejeu , avec ledit serveur cache, d'une séquence de messages échangés entre le serveur cache et le serveur dit d'origine au cours d'une session de communication établie entre le serveur cache et le serveur d'origine au cours de laquelle ledit contenu a été délivré auprès du serveur cache , ladite séquence de messages ayant été enregistrée par ledit serveur cache.

En délégant la livraison de contenus à des serveurs cache, il est possible de réduire les coûts liés à l'exécution de cette fonction de livraison de contenus. En effet, en déléguant la livraison de contenus à un serveur cache il est possible de réduire le nombre de connexions entre équipements de communication afin de livrer de contenus, notamment en réutilisant les connections existantes entre les équipements utilisateur et les serveurs cache. Une telle réduction du nombre de connexions entre équipements de communication entraine une réduction de la consommation énergétique de ces équipements de communication

Contrairement aux techniques de "caching" connues dans lesquelles le contenu en lui-même est stocké dans au moins une mémoire cache d'un serveur cache, la solution proposée repose sur le stockage dans le serveur cache d'une copie à l'identique de l'ensemble des messages échangés entre le serveur d'origine hébergeant le contenu et le serveur cache conduisant à la livraison du contenu au serveur cache.

Le rejeu peut être réalisé vers plusieurs terminaux en même temps dans une même connexion point à multipoint dite IP multicast comme décrit dans le document https://tools.ietf.org/html/draft-pardue-quic-http-mcast-00#section-3 publié par l'IETF
Ainsi, lorsqu'un terminal souhaite accéder à un contenu donné, le serveur cache rejoue avec le terminal la séquence de messages précédemment échangés entre le serveur d'origine hébergeant le contenu et le serveur cache ayant conduit à la livraison du contenu au serveur cache. Le terme rejeu consiste en la répétition, par le serveur cache et avec le terminal, de la séquence de messages échangés entre le serveur d'origine et le serveur cache lors du téléchargement du contenu requis, les messages rejoués pouvant, en cas de besoin, être modifiés pour s'adapter au contexte dans lequel ils sont rejoués.

Une telle solution de délégation de livraison de contenus présente également des performances accrues. Cela tient au fait que le nombre de connexions établies entre équipements de communication afin de livrer un contenu est réduit.

Enfin, la solution livraison de contenus proposée est fiable. En effet, dans le cadre du procédé de livraison de contenus décrit, un serveur cache mettant en oeuvre une livraison de contenus est doté d'une autorisation d'exécution de cette fonction de livraison de contenus qui peut être vérifiée le cas échéant.

Selon une autre caractéristique particulière du procédé d'accès à un contenu, ladite autorisation d'accès a une durée de validité.

Une fois la durée de validité expirée, le terminal ne peut plus accéder au contenu. Cela permet de limiter la diffusion d'un contenu donné.

L'invention concerne également un procédé de contrôle d'accès à un contenu mémorisé dans un serveur dit cache par au moins un terminal, dans un réseau de diffusion de contenu comprenant au moins ledit terminal, un serveur d'origine (12) et le serveur cache (11), ledit procédé étant mis en oeuvre par le serveur cache et comprenant :
une première phase comprenant l'étape suivante de :
   - réception d'un premier fichier comprenant des données de contrôle d'accès audit contenu délivré par un serveur dit d'origine associé audit contenu,
une deuxième phase comprenant les étapes suivantes de :
   - réception d'une demande d'accès audit contenu émise par ledit terminal,
   - réception d'un deuxième fichier, transmis par le terminal et comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal par le serveur d'origine,
   - vérification de l'authenticité du deuxième fichier comprenant ladite autorisation d'accès audit contenu au moyen du premier fichier comprenant des données de contrôle d'accès audit contenu,
   - lorsque l'authenticité du deuxième fichier est vérifiée, livraison du contenu audit terminal.

Selon un mode de réalisation particulier du procédé de contrôle d'accès, le premier fichier comprend en outre un logiciel de traitement dudit deuxième fichier.

Un tel logiciel permet de traiter les données comprises dans le deuxième fichier afin de vérifier l'authenticité et l'intégrité de ces dernières.

Un tel logiciel peut être propre à une ou plusieurs séries de terminaux particuliers, par exemple l'ensemble des terminaux d'une certaine gamme d'un fabriquant donné.

Ce logiciel peut être développé et fourni par un tiers, se présenter sous la forme d'une application, etc.

Selon un autre mode de réalisation particulier du procédé de contrôle d'accès, celui-ci comprend une étape d'enregistrement d'une séquence de messages échangés entre le serveur cache et le serveur d'origine hébergeant le contenu au cours d'une session de communication établie avec le serveur d'origine associé audit contenu et au cours de laquelle ledit contenu est livré au serveur cache.

Dans une implémentation particulière de cet autre mode de réalisation du procédé de contrôle d'accès, le premier fichier est livré au cours de ladite session de communication établie avec le serveur d'origine .

Cela permet de limiter les échanges entre le serveur cache et le serveur d'origine ce qui contribue à accroitre les performances.

Dans une autre implémentation particulière de cet autre mode de réalisation du procédé de contrôle d'accès, celui-ci comprend une étape de rejeu , avec ledit au moins un terminal, de la séquence de messages enregistrée, résultant en la livraison dudit contenu.

L'invention concerne un serveur dit cache capable de contrôler un accès à un contenu mémorisé dans le serveur dit cache par au moins un terminal, dans un réseau de diffusion de contenu comprenant au moins ledit terminal, un serveur d'origine (12) et le serveur cache (11), le serveur cache comprenant des moyens pour :
- recevoir un premier fichier comprenant des données de contrôle d'accès audit contenu délivré par un serveur dit d'origine associé audit contenu,
- recevoir une demande d'accès audit contenu émise par ledit terminal,
- recevoir un deuxième fichier, transmis par le terminal et comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal par le serveur d'origine,
- vérifier l'authenticité du deuxième fichier comprenant ladite autorisation d'accès audit contenu au moyen du premier fichier comprenant des données de contrôle d'accès audit contenu,
- lorsque l'authenticité du deuxième fichier est vérifiée, livrer le contenu audit terminal.

Un autre objet de l'invention concerne un terminal requérant un accès à un contenu, dans un réseau de diffusion de contenu comprenant au moins ledit terminal, un serveur d'origine (12) et un serveur cache (11), ledit terminal (10) comprenant des moyens pour :
- recevoir un fichier comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal par un serveur d'origine associé audit contenu,
- émettre une demande d'accès audit contenu à destination d'un serveur dit cache dans lequel ledit contenu est mémorisé,
- transmettre le fichier comprenant ladite autorisation d'accès à destination du serveur cache,
- recevoir le contenu transmis par le serveur cache lorsque l'authenticité du fichier est vérifiée par le serveur cache .

L'invention concerne enfin des produits programme d'ordinateur comprenant des instructions de code de programme pour la mise en oeuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****]** : cette figure représente un diagramme d'échanges de messages entre différents terminaux contribuant à la mise en oeuvre d'une telle solution de « *URL signing* »,
**[****fig. 2****]** : cette figure représente un système dans lequel les procédés objets de l'invention sont mis en oeuvre,
**[****fig. 3****]** : cette figure représente un diagramme d'échanges entre différents équipements de communication impliqués dans l'implémentation des procédés d'accès à moins un contenu et de contrôle d'accès à au moins un contenu,
**[****fig. 4****]** : cette figure représente un terminal apte à mettre en oeuvre les différents modes de réalisation du procédé d'accès à au moins un contenu selon la figure 3,
**[****fig. 5****]** : cette figure représente un serveur cache apte à mettre en oeuvre les différents modes de réalisation du procédé de contrôle d'accès à un contenu selon la figure 3.

### Description détaillée de modes de réalisation de l'invention

Le principe général de l'invention repose sur la délégation du contrôle d'accès habituellement effectuée par des serveurs d'origines hébergeant des contenus à livrer, appelés serveurs d'origine des contenus dans la suite du document, à des serveurs cache, tels que des serveurs web, gérés par exemple par un fournisseur de service internet. De tels serveurs cache mettent en oeuvre une fonction de « cache intermédiaire » et sont appelés dans la suite du document serveurs cache.

Ainsi, un serveur cache stocke dans au moins une de ses mémoires cache des contenus transmis par les serveurs d'origine desdits contenus ainsi qu'un ou plusieurs fichiers associés à ces contenus et comprenant des données permettant d'effectuer les opérations de contrôle d'accès à ces contenus à la place du serveur d'origine. Lorsqu'une autorisation d'accès à un contenu transmise par un terminal est vérifiée, le serveur cache transmet ce contenu à un client embarqué dans le terminal sans se reconnecter au serveur d'origine du contenu identifié dans une requête demandant la fourniture du contenu.

On présente désormais, en relation avec la **[****fig. 2****]** représente un système dans lequel les procédés objets de l'invention sont mis en oeuvre.

Le système comprend au moins un terminal 10 requérant un accès à au moins une ressource correspondant à un contenu au moyen d'une URL identifiant ladite ressource, tel qu'une page web ou un contenu multimédia, un serveur cache 11 dont l'identifiant de nommage est par exemple *orange.fr,* et au moins un serveur d'origine 12 dont l'identifiant de nommage est par exemple *journal.fr,* hébergeant au moins un contenu à livrer, comme par exemple une page web référencée *journal.fr*/*news*/*week19* et stockant des données relatives au contenu requis par le terminal 10 tel que des données relatives à la page web *journal.fr*/*news*/*week19* ou des données relatives à un contenu téléchargeable, etc. Il s'agit par exemple d'un journal composés de pages Web comprenant des contenus de type différents tels que du texte, des images, des vidéos, des fichiers sonores, des animations 3D, et.

Le terminal 10 peut échanger des messages avec le serveur cache 11 et avec le serveur d'origine 12. Un terminal 10 est un équipement pouvant émettre des requêtes pour obtenir un contenu tel qu'un ordinateur personnel, une passerelle domestique, un décodeur de télévision numérique, un smartphone, un capteur, etc.

Ces divers échanges de messages entre ces différents équipements ainsi que leurs contenus sont expliqués plus en détail dans la suite de ce document.

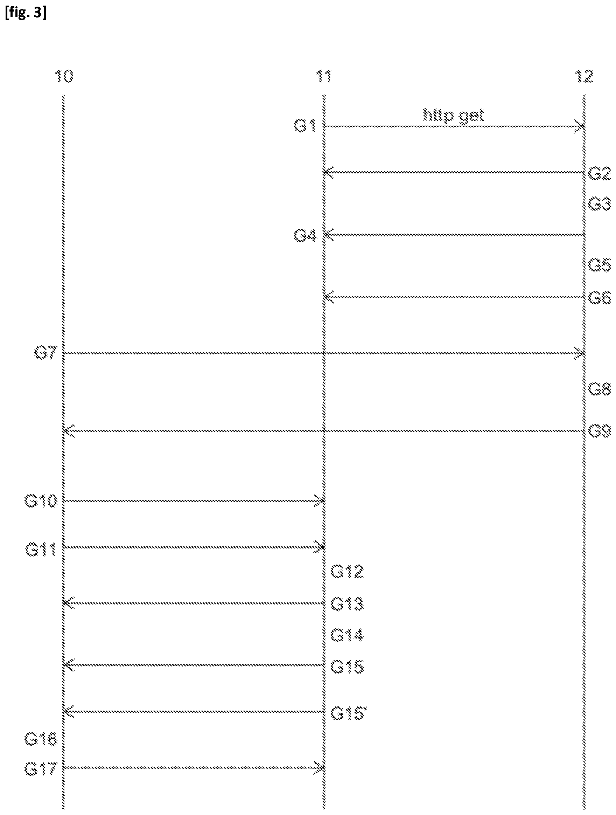

La **[****Fig. 3****]** représente un diagramme d'échanges entre différents équipements de communication impliqués dans l'implémentation des procédés d'accès à moins un contenu et de contrôle d'accès à au moins un contenu.

Dans une étape G1, le serveur cache 11 établit une session de communication avec le serveur d'origine 12 associé à au moins un contenu donné au cours de laquelle le contenu est délivré au serveur cache 11.

L'émission par le serveur cache 11 d'un message de type http *get* déclenche la procédure de livraison du contenu.

Dans un premier mode de réalisation des procédés objets de l'invention, de manière classique, le contenu en lui-même est livré au serveur cache 11 par le serveur d'origine 12 et stocké dans au moins une mémoire cache du serveur cache 11 au cours d'une étape G2.

Dans un deuxième mode de réalisation des procédés objets de l'invention, contrairement aux techniques de "caching" connues dans lesquelles le contenu en lui-même est stocké dans au moins une mémoire cache du serveur cache 11, les procédés objet de la présente invention reposent sur le stockage dans au moins une mémoire cache du serveur cache 11 de l'ensemble des messages échangés entre le serveur d'origine 12 et le serveur cache 11 conduisant à la livraison du contenu au serveur cache 11. Dans ce deuxième mode de réalisation, l'étape G2 précédemment décrite n'est pas mise en oeuvre.

Au cours d'une étape G3, le serveur d'origine 12 génère des informations protocolaires telles que des informations de signalisation, comme des entêtes http, cookies, contrôle d'accès, etc., et/ou des informations de contrôle destinées à être utilisées lors de la livraison du contenu à un terminal 10,

Les informations protocolaires générées sont par exemple une la liste de champs d'entête qu'il est possible d'adapter. Une telle liste JSON PATCH est par exemple la suivante :

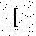

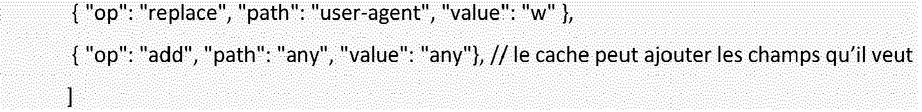

Les informations protocolaires générées peuvent comprendre des instructions permettant de changer le protocole ou la version de protocole utilisé lors téléchargement du contenu entre le serveur d'origine 12 et le serveur cache 11 afin de s'adapter au protocole utilisé par le terminal 10.

Enfin, Les informations protocolaires générées peuvent également comprendre des instructions permettant de changer l'espacement temporel entre les messages pour réduire le débit, et indiquer ces changements dans des messages de contrôle.

Les informations protocolaires ainsi générées par le serveur d'origine 12 sont ensuite certifiées par le serveur d'origine 12 au moyen des paramètres cryptographiques dérivés, entre autres, à partir d'une clé privée associée à une clé publique du serveur d'origine 12. Ainsi, l'intégrité des informations protocolaires ainsi générées est garantie.

Dans une étape G4, le serveur cache 11 stocke, dans au moins l'une de ses mémoires cache, l'ensemble des messages échangés, ou joués, avec le serveur d'origine 12 associé audit contenu qui suivent l'émission du message http *get* dans un fichier de type HARS (*http archive secure)* par exemple, dit fichier de livraison du contenu FLC. Le format HARS permet de stocker des messages sous une forme dite « opaque », c'est-à-dire inchangée, ou sous forme interprétable, ou sous forme mixte afin de garder les messages de données sous forme chiffrée tout en laissant toute ou partie des informations de signalisation lisible.

L'ensemble des messages enregistrés par le serveur cache 11 comprend les messages comprenant les informations protocolaires générées et certifiées par le serveur d'origine 12 ainsi que l'ensemble des messages classiquement échangés entre le serveur d'origine 12 et le serveur cache 11 lors du téléchargement d'un contenu donné. Les messages classiquement échangés entre le serveur d'origine 12 et le serveur cache 11 lors du téléchargement d'un contenu constituent la forme primitive correspondant aux flux de paquets échangés lors du téléchargement de ces contenus.

Un exemple des messages échangés entre le serveur d'origine 12 et le serveur cache 11 est représenté ci-dessous :

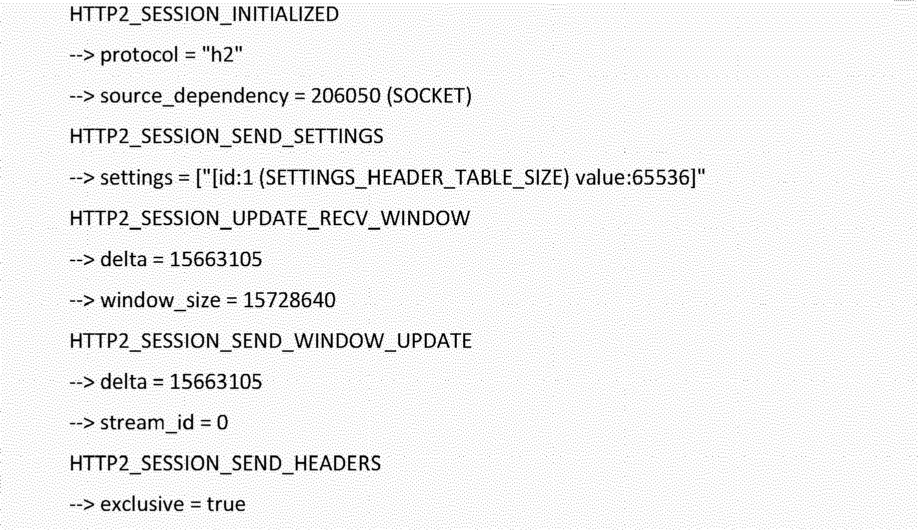

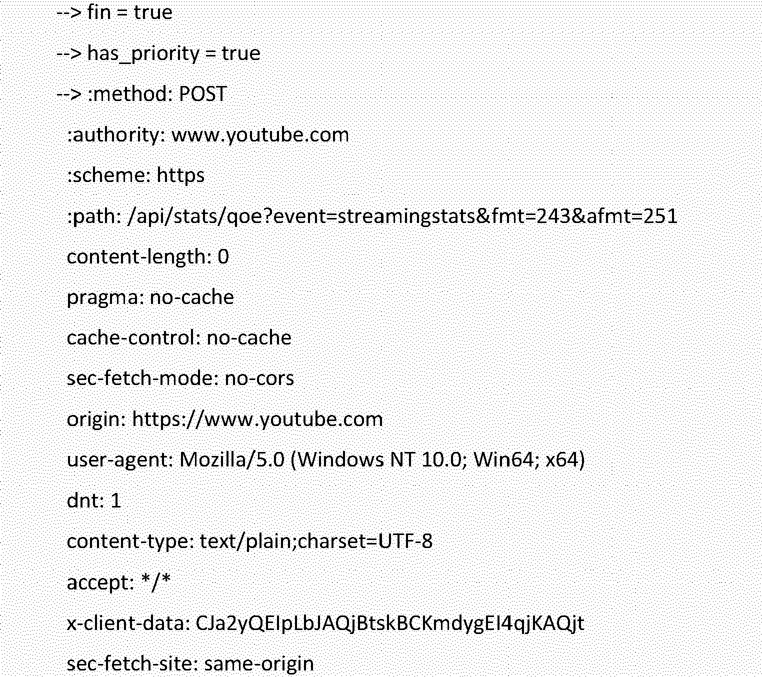

A l'issue de cet enregistrement, les messages comprenant les informations protocolaires générées et certifiées par le serveur d'origine 12 ainsi l'ensemble des messages classiquement échangés entre le serveur d'origine 12 et le serveur cache 11 lors du téléchargement d'un contenu sont stockés dans le serveur cache 11. Ces messages sont mémorisés dans un fichier HARS, dit fichier de livraison du contenu FLC, lui-même stocké dans le serveur cache 11.

Le format d'enregistrement HARS permet de stocker dans un fichier, ou une archive, les différents messages transportant les informations protocolaires générées par le serveur d'origine 12 et les différents messages de données échangés, ou joués, lors du téléchargement du contenu entre le serveur d'origine 12 et le serveur cache 11. De tels messages sont par exemple conformes aux protocoles HTTP2 ou QUIC.

Dans une étape G5, le serveur d'origine 12 génère un fichier de contrôle d'accès FCA comprenant des données permettant de contrôler l'accès à la ressource associée au contenu donné et identifiée par une URL. Les données comprises dans ce fichier de contrôle d'accès FCA sont soit spécifiques à un terminal 10 donné, soit génériques et peuvent, par exemple, s'appliquer à un modèle de terminal donné tout en étant spécifiques au contenu requis, soit génériques quant au terminal et quant au contenu requis, dans ce dernier cas de figures, elles s'appliquent alors à l'ensemble des ressources du serveur d'origine 12.

Le fichier de contrôle d'accès FCA peut comprendre un logiciel de traitement d'une autorisation d'accès ou d'un fichier comprenant une telle autorisation d'accès. Le fichier de contrôle d'accès FCA peut également comprendre d'autres données telles que des paramètres relatifs au volume de contenu pouvant être téléchargé par un même terminal, une durée d'accès à un ou plusieurs contenus donnés.

Le fichier de contrôle d'accès FCA est un fichier HARS.

Dans une étape G6, le serveur d'origine 12 transmet le fichier de contrôle d'accès FCA au serveur cache 11.

Dans une implémentation particulière du premier mode de réalisation, le fichier de contrôle d'accès FCA est transmis au serveur cache 11 avec le contenu au cours de l'étape G2. Dans cette implémentation particulière du premier mode de réalisation, l'étape G6 n'est pas mise en oeuvre et l'étape G5 est mise en oeuvre préalablement à l'étape G2.

Dans une implémentation particulière du deuxième mode de réalisation, le fichier de contrôle d'accès FCA est transmis par le serveur d'origine au cours de la même série d'échange de messages qui conduit à la fourniture du contenu au cours de l'étape G4. Dans cette implémentation particulière du deuxième mode de réalisation, le serveur cache 11 stocke, dans au moins l'une de ses mémoires cache, l'ensemble des messages échangés, ou joués, avec le serveur d'origine 12 et relatifs à la livraison du contenu dans un fichier de type HARS dit fichier de livraison du contenu FLC, ainsi que le fichier de contrôle d'accès FCA. Le fichier de livraison du contenu FLC et le fichier de contrôle d'accès FCA sont deux fichiers distincts. Dans cette implémentation particulière du deuxième mode de réalisation, l'étape G6 n'est pas mise en oeuvre et l'étape G5 est mise en oeuvre préalablement à l'étape G4. L'étape G5 peut être mise en oeuvre avant, après ou concomitamment à l'étape G3.

A l'issue des étape G2, G4 ou G6, selon l'implémentation mise en oeuvre, le serveur cache 11 dispose du contenu demandé compris dans le fichier de livraison du contenu FLC et du fichier de contrôle d'accès FCA au contenu.

Dans un mode de réalisation particulier, le fichier de livraison du contenu FLC et le fichier de contrôle d'accès FCA sont enregistrés par le serveur cache 11 dans un fichier HARS commun, par exemple dans deux « *streams* » distinctes des protocoles HTTP2 ou QUIC. Dans ce mode de réalisation particulier, le serveur d'origine 12 transmet, au cours des échanges avec le serveur cache 11, des instructions JSON PATCH, telles que définies par exemple dans le document https://tools.ietf.org/html/rfc6902#section-4.6 publié par l'IETF et décrites ci-dessous, afin que le serveur cache 11 retire les données constituant le fichier de contrôle d'accès FCA au moment de la livraison du contenu au terminal 10 :

```
  [
  { "op": "remove", "path": "/FCA/*" }, // demande de suppression de la livraison des
  paramètres de contrôles FCA
  ]
```

Les étapes G1 à G6 ne déclenchent pas directement les étapes G7 et suivantes, mais doivent leur être préalables afin d'assurer la bonne exécution des procédés de contrôle d'accès et d'accès à un contenu.

Dans une étape G7, le terminal 10, dont un utilisateur souhaite accéder à un contenu donné, émet un message, par exemple du type *http GET* comprenant l'URL d'une ressource associée au contenu requis, à destination du serveur d'origine 12 associé au contenu demandé. Un tel message comprend au moins un identifiant du serveur d'origine 12 et un identifiant du contenu requis.

Au cours d'une étape G8, le serveur d'origine 12 génère une autorisation d'accès au contenu demandé en réponse à la réception du message *http GET.*

L'autorisation d'accès générée par le serveur d'origine 12 est par exemple comprise dans un fichier, dit fichier d'autorisation d'accès FAA. Un tel fichier d'autorisation d'accès FAA est un fichier HARS comprenant l'ensemble des messages tels qu'ils ont été échangés entre le terminal 10 et le serveur d'origine 12 associé audit contenu, à partir de l'émission de la demande d'autorisation d'accès à la ressource associée au contenu requis émise par le terminal 10 au cours de l'étape G7.

Dans une première implémentation, l'émission de la demande d'autorisation d'accès à la ressource associée au contenu requis est un message *http GET URL* émis par le terminal 10 au cours de l'étape G7. Le fichier d'autorisation d'accès FAA comprend alors le message *http GET URL* émis par le terminal 10 et un message *http 200 OK* émit par le serveur d'origine 12. Le message *http 200 OK* émit par le serveur d'origine 12constitue une preuve que le serveur d'origine 12 autorise le terminal 10 a accéder au contenu demandé.

Dans cette première implémentation, le serveur d'origine 12 peut également transmettre, parmi ces échanges, des messages comprenant des identifiants, tels que des adresses IP (*Internet Protocol,* de serveurs caches 11 qui disposent du contenu demandé.

Ces identifiants de serveurs caches 11 peuvent être compris dans un entête d'un message *alternate service* tel que défini dans le RFC7838 (*Request For Comment*) publié par l'IETF :
Alt-Svc: h2=" *FQDN_A*:8000";
Alt-Svc: wpack="192.168.1.1:8000";
où FQDN_A est un serveur cache 11 dans lequel le contenu demandé est stocké.

Ces identifiants de serveurs caches 11 peuvent être transmis par diffusion d'informations relatives à la résolution de noms de domaines DNS par un serveur de noms de domaines ou serveur DNS indépendant ou encore par le serveur d'origine 12 effectuée selon le protocole *DoH resolverless.* Ces informations relatives à la résolution de noms de domaines DNS pointent directement vers une adresse IP, par exemple ici une adresse de type IPv4, du serveur cache 11 FQDB_A: par exemple *'A FQDN_B 192.168.1.1:8000'.*

Ces identifiants de serveurs caches 11 peuvent encore être transmis par diffusion d'informations relatives à une résolution dite *redirect DNS* effectuée selon le protocole *DoH resolverless* en prenant par exemple la forme *'CNAME FQDN_B FQDN_A',* où FQDN_B est le serveur d'origine 12.

Dans une deuxième implémentation, le serveur d'origine 12 se comporte comme un serveur ACME STAR (*Automatic Certificate Management Environment,* ou en français environnement de gestion automatique de certificat), ces deux protocoles ACME et STAR étant respectivement définis dans les publications https://tools.ietf.org/html/rfc8739 et https://tools.ietf.org/html/draft-ietf-acme-star-delegation-01 de l'IETF.

De manière connue, le protocole ACME est utilisé pour générer des certificats X509 signés par une autorité de certification. Typiquement de tels certificats sont délivrés à un ou plusieurs serveurs caches 11 afin de leur déléguer certaines fonctions d'un serveur d'origine 12.

Le protocole ACME est notamment utilisé pour générer automatiquement des certificats pour des serveurs Web afin de faciliter la migration du protocole HTTP vers le protocole HTTPS. L'extension STAR du protocole ACME définie dans le document RFC 8739 publié par l'IETF permet le renouvellement automatique de ces certificats et donc la génération de certificats ayant une courte durée de validité.

Dans cette implémentation classique du protocole ACME, l'authentification du serveur d'origine 12 auprès du terminal 10 est réalisée en utilisant des messages conformes au protocole TLS (*Transport Layer Security*) tels que le message *ServerHello,* ou lorsque des messages conformes au protocole du protocole QUIC sont utilisés, le message SHO. L'authentification du terminal 10 auprès du serveur d'origine 12 est, quant à elle, réalisée en utilisant un protocole applicatif comme par exemple les protocoles FTP, FTTP, HTTP2, HTTP3, TCP, SCTP, TLS ou encore QUIC situés au-dessus de la couche transport.

Dans cette deuxième implémentation, il est proposé de définir une nouvelle extension au protocole HTTP2 nommée WINS_US_STAR qui s'inspire du protocole ACME tel que défini dans le document RFC 8739 publié par l'IETF ainsi que de l'extension HTTP2 définie dans le document draft-ietf-httpbis-http2-secondary-certs également publié par l'IETF.

Dans cette nouvelle extension du protocole HTTP2, un certificat CERT_CLIENT_STAR est un certificat temporaire similaire à un certificat créé à l'aide des protocoles ACME dont la durée de validité est limitée dans le temps.

Ainsi, dans cette deuxième implémentation, le serveur d'origine 12 fournit un certificat temporaire au terminal 10 qui autorise l'accès du terminal à la ressource associée au contenu requis. Le certificat temporaire fourni par le serveur d'origine au terminal 10 est dérivé d'un certificat CERT_CLIENT propre au terminal 10.

Dans une étape G7, le terminal 10 établit une connexion sécurisée de type *https* avec le serveur d'origine 12 conformément au protocole HTTP2. Au cours de ces échanges, le terminal 10 informe le serveur d'origine 12 qu'il supporte l'extension WINS_US_STAR du protocole HTTP2.

Au cours de cette étape G7, le terminal 10 génère une paire de clés cryptographiques comprenant une clé privée WINS_US_PRI et une clé publique WINS_US_PUB associées au certificat CERT_CLIENT du terminal 10.

Le terminal 10 calcule des preuves de possession nommées WINS_US_CHALLENGE1 et WINS_US_CHALLENGE2 respectivement de la clé privée WINS_US_PRI et de la clé privée WINS_US_PRI en chiffrant l'URL identifiant la ressource associée au contenu requis au moyen de ces deux clés cryptographiques.

Le terminal 10 regroupe ensuite les preuves de possession WINS_US_CHALLENGE 1 et WINS_US_CHALLENGE 2, la clé publique WINS_US_PUB ainsi que d'autres paramètres permettant de créer des certificats, dans un nouveau message appelé WINS_US_CSR. WINS_US_CSR est l'équivalent du message CSR (*Certificate Signing Request*) du protocole ACME.

Lors de l'établissement de la connexion HTTP2 avec le serveur d'origine 12, au cours de l'étape G7, le terminal 10 transmet une demande d'accès à la ressource FQDN_B/sth/app comprenant:
∘ un paramètre WINS_US=TRUE indiquant qu'il supporte l'extension WIN_US_STAR;
∘ la requête *http GET* URL FQDN_B/sth/app;
∘ le certificat CERT_CLlENT du terminal 10;
∘ une demande de certificat temporaire d'autorisation d'accès à la ressource associée au contenue requis.

Dans une étape G8, le serveur d'origine 12 reçoit demande d'accès à la ressource FQDN_B/sth/app émise par le terminal 10.

Le serveur d'origine 12 détecte la présence du champ WINS_US=TRUE qui indique que le terminal 10 supporte l'extension WIN_US.

Le serveur d'origine 12 identifie ensuite la ressource demandée et vérifie les droits d'accès du terminal 10 à cette ressource et au contenu auquel elle est associée.

Le serveur d'origine 12 vérifie ensuite que le déchiffrement des preuves de possession WINS_US_CHALLENGE 1 et WINS_US_CHALLENGE 2 au moyen de la clé publique WINS_US_PUB donne bien l'URL FQDN_B/sth/app identifiant la ressource requise.

Une fois ces vérifications effectuées, le serveur d'origine 12 génère un certificat CERT_CLIENT_STAR à partir du certificat CERT_CLIENT du terminal 10. Le serveur d'origine 12 inclut dans un champ SAN (https://fr.wikipedia.org/wiki/Subject Alternative_Name) du certificat CERT_CLIENT_STAR au moins l'URL identifiant la ressource associée au contenu requis telle que par exemple : FQDN_B/sth/app où FQDN_B correspond au serveur d'origine 12 et où /sth/app est la ressource demandée, ainsi que d'autres paramètres tels que des paramètres relatifs au volume de contenu pouvant être téléchargé par le terminal 10 ou à la durée de validité du certificat CERT_CL!ENT_STAR.

Dans une étape G9, le serveur d'origine 12 transmet le fichier d'autorisation d'accès FAA au terminal 10 qui le stocke dans l'une de ses mémoires pour un usage ultérieur. Dans la deuxième implémentation, le fichier FAA est constitué du certificat CERT_CL!ENT_STAR

Dans une étape G10, qui peut être mise en oeuvre quelques instants, heures ou jours plus après la mise en oeuvre de l'étape G9, le terminal 10 émet un message, tel qu'un message *http GET* comprenant l'URL de la ressource FQDN_B/sth/app identifiant la ressource associée au contenu requis à destination du serveur cache 11 indiqué dans le fichier d'autorisation d'accès FAA. Un tel message comprend l'URL associée au contenu demandé FQDN_B/sth/app.

Au cours d'une étape G11 qui peut être concomitante ou consécutive à l'étape G10, le terminal 10 transmet le fichier d'autorisation d'accès FAA au serveur cache 11.

Dans une étape G12, le serveur cache 11 procède alors à la vérification de l'authenticité et de l'intégrité du fichier d'autorisation d'accès FAA au moyen du fichier de contrôle d'accès FCA.

Ainsi, serveur cache 11 exécute le logiciel compris dans le fichier de contrôle d'accès FCA afin d'accéder aux données comprises dans le fichier d'autorisation d'accès FAA.

Le traitement des données comprises dans le fichier d'autorisation d'accès FAA effectué lors de l'exécution du logiciel compris dans le fichier de contrôle d'accès FCA permet de vérifier l'authenticité et l'intégrité des données comprises dans le fichier d'autorisation d'accès FAA et donc de l'autorisation d'accès au contenu demandé.

Par exemple, dans la première implémentation, le logiciel extrait du fichier d'autorisation d'accès l'URL FQDN_B/sth/app ainsi que le message *http 200 OK* émit par le serveur d'origine 12 qui constitue l'autorisation d'accès au contenu demandé. Le logiciel vérifie également si la durée de validité de l'autorisation d'accès est expirée et/ou si le volume limite de données téléchargées est atteint. Ainsi, le fichier FCA contient des paramètres de chiffrement de la session d'enregistrement des fichiers FAA. Le serveur cache 11 peut alors lire le fichier FAA et analyser les échanges qu'il contient pour en extraire l'URL de la ressource associée au contenu requis et en parallèle chercher si le contenu est stocké dans l'une de ses mémoires, ou encore extraire la réponse de l'origine (200 OK).

Dans la deuxième implémentation, le logiciel fourni par le serveur d'origine 12 au cours de l'étape G5 extrait du fichier d'autorisation d'accès FAA le certificat CERT_CL!ENT_STAR et l'URL FQDN_B/sth/app. Le logiciel vérifie également si la durée de validité de l'autorisation d'accès est expirée et/ou si le volume limite de données téléchargées est atteint. Le logiciel fourni n'est pas spécifique au serveur d'origine 12, il permet, lorsqu'il est exécuté, de vérifier que le CERT_CLIENT_STAR est valide et est correctement signé par le serveur d'origine 12 en utilisant une clé publique d'un certificat du serveur d'origine 12 obtenu dans les étapes G2 ou G4.

La vérification de l'authenticité et de l'intégrité du fichier d'autorisation d'accès FAA par le serveur cache 11 déclenche dans le premier mode de réalisation la livraison du contenu au terminal 10 au moyen de techniques classiques de livraison de contenus dans une étape G13.

Dans le deuxième mode de réalisation, la vérification de l'authenticité et de l'intégrité du fichier d'autorisation d'accès FAA par le serveur cache 11 déclenche le rejeu du fichier de livraison de contenu FLC stocké dans le serveur cache 11 et associé au contenu requis.

Dans une première variante des procédés objet de l'invention, les modifications à appliquer à certains messages du fichier de livraison de contenu FLC sont effectuées au niveau du serveur cache 11. Les modifications à appliquer à certains messages du fichier de livraison de contenu FLC consistent à modifier certains paramètres des messages stockés dans le fichier de livraison de contenu FLC en fonction des informations protocolaires générées par le serveur d'origine 12 et également stockées dans le fichier de livraison de contenu FLC.

Dans une première implémentation de réalisation de cette première variante, au cours d'une étape G14, le serveur cache 11 prépare le rejeu du fichier de livraison de contenu FLC associé au contenu avec le terminal 10 en vue de livrer le contenu requis à ce dernier.

Pour cela, le serveur cache 11 modifie certains des messages stockés dans le fichier de livraison de contenu FLC associé au contenu requis afin de les adapter aux points d'émission/réception, c'est-à-dire le serveur cache 11 et le terminal 10, s'ils sont différents de ceux du jeu de messages initial, c'est-à-dire s'ils sont différents des messages échangés entre le serveur d'origine 12 et le serveur cache 11 lors du téléchargement du contenu requis. Pour cela, le serveur cache 11 procède à ces modifications sur la base d'informations protocolaires générées par le serveur d'origine 12. Le terme modification des messages stockés dans le fichier de livraison de contenu FLC couvre l'ajout, la suppression de messages ou la modification de certains paramètres relatifs aux messages. Une telle liste de modifications de valeurs est par exemple :
user-agent: Mozilla/5.0
x-nginx-cache-version: 8.4.1

Une fois le fichier de livraison de contenu FLC associé au contenu prêt, le serveur cache 11 déclenche, dans une étape G15, le rejeu des messages stockés dans le fichier de livraison de contenu FLC et modifiés au cours de l'étape G14.

Dans une deuxième implémentation de réalisation de cette première variante, le serveur cache 11 modifie certains des messages stockés dans le fichier de livraison de contenu FLC associé au contenu requis afin de les adapter aux points d'émission/réception, lors du rejeu de ces messages. Ainsi, dans cette deuxième implémentation de cette première variante, les messages devant être modifiés le sont au fil de l'eau.

Tout comme dans la première implémentation, la modification des messages se fait sur la base des informations protocolaires générées par le serveur d'origine 12. Quelle que soit l'implémentation, les modifications apportées à certains messages du fichier de livraison de contenu FLC peuvent également permettre de changer le protocole utilisé lors téléchargement du contenu entre le serveur d'origine 12 et le serveur cache 11 afin de s'adapter au terminal 10. Ces changements sont alors indiqués dans les messages de contrôles insérés par le serveur cache 11. Ainsi, à titre d'exemple, les messages *http get* stockés dans le fichier de livraison de contenu FLC sont remplacés par des messages de type *push* http2, etc.

Les modifications apportées à certains messages du fichier de livraison de contenu FLC peuvent également changer l'espacement temporel entre les messages pour réduire le débit, et indiquer ces changements dans les messages de contrôle.

A l'issue du rejeu de l'ensemble des messages stockés dans le fichier de livraison de contenu FLC et modifiés au cours de l'étape G14, le contenu requis est livré au terminal 10.

A l'issue du rejeu de l'ensemble des messages stockés dans le fichier de livraison de contenu FLC, le terminal 10 dispose également des informations de protocolaires générées par le serveur d'origine 12 qui peuvent être utilisées afin de vérifier l'intégrité des données transmises par le serveur cache 11.

Dans une deuxième variante des procédés objet de l'invention, les modifications à appliquer à certains messages du fichier de livraison de contenu FLC sont effectuées au niveau du terminal 10. Le terminal 10 modifie certains paramètres des messages stockés dans le fichier de livraison de contenu FLC qui a été transmis au terminal 10 en fonction des informations de protocolaires générées par le serveur d'origine 12, et elles-mêmes comprises dans le fichier de livraison de contenu FLC transmis. Dans cette deuxième variante, le terminal 10 peut utiliser des informations protocolaires supplémentaires afin de modifier de certains messages compris dans le fichier de livraison de contenu FLC. De telles informations protocolaires supplémentaires ne sont pas comprises dans le fichiers de livraison de contenu FLC, elles sont transmises séparément au terminal 10 par le serveur cache 11 dans une étape G15'. Cela tient au fait que dans ce cas de figure, les informations protocolaires comprises dans le fichier de livraison de contenu FLC concernent l'identité des messages à modifier en vue du rejeu, et les informations protocolaires supplémentaires concernent les valeurs à appliquer aux messages identifiés dans les informations protocolaires lors de leur modifications. Les informations protocolaires supplémentaires sont générées par le serveur cache 11 en fonctions d'informations reçues en provenance du terminal 10. Ainsi, si les informations protocolaires peuvent être communes à plusieurs terminaux, les informations protocolaires supplémentaires sont propres au terminal 10.

Dans une première implémentation de cette deuxième variante, au cours d'une étape G16, le terminal 10, modifie, créé ou supprime, des valeurs de champs d'entêtes de certains messages initialement échangés entre le serveur d'origine 12 et le serveur cache 11 en vue du rejeu, entre le serveur cache 11 et le terminal 10, de la séquence de messages enregistrée au cours de l'étape G4. La liste des valeurs de champs d'entêtes pouvant être modifiées est par exemple :

```
 [
 { "op": "replace", "path": "user-agent", "value": " Mozilla/5.0 (Linux; Android 7.0; SM-G892A
 Build/NRD90M; wv) AppleWebKit/537.36 (KHTML, like Gecko) Version/4.0 Chrome/60.0.3112.107
 Mobile Safari/537.36 " },
 {"op": "add", "path": "/x-nginx-cache-version", "value": "8.4.1"},
 ]
```

Une fois le fichier de livraison de contenu FLC associé au contenu prêt, le terminal 10 déclenche, dans une étape G17, le rejeu des messages stockés dans le fichier de livraison de contenu FLC et modifiés au cours de l'étape G16.

Dans une deuxième implémentation de cette deuxième variante, le terminal 10 modifie certains des messages stockés dans le fichier de livraison de contenu FLC associé au contenu requis afin de les adapter aux points d'émission/réception, lors du rejeu de ces messages. Ainsi, dans cette deuxième implémentation de cette deuxième variante, les messages devant être modifiés le sont au fil de l'eau.

Tout comme dans la première implémentation, la modification des messages se fait sur la base des informations protocolaires générées par le serveur d'origine 12.

Quelle que soit l'implémentation, les modifications à apporter à certains messages du fichier de livraison de contenu FLC peuvent également permettre de changer le protocole utilisé lors téléchargement du contenu entre le serveur d'origine 12 et le serveur cache 11 afin de s'adapter au terminal 10. Ces changements sont alors indiqués dans les messages de contrôles insérés par le terminal 10. Ainsi, à titre d'exemple, les messages *http get* stockés dans le fichier HARS sont remplacés par des messages de type *push* http2, etc.

Le terminal 10 peut également changer l'espacement temporel entre les messages pour réduire le débit, et indiquer ces changements dans les messages de contrôle.

Aussi bien dans la première variante que dans la deuxième variante, le terminal 10 dispose d'une version certifiée par le serveur d'origine 12 des informations protocolaires, le terminal 10 peut donc vérifier, au moyens des clés cryptographiques reçue, que les modifications effectuées par le serveur cache 11 ou le terminal 10 respectent les consignes du serveur d'origine 12.

A l'issue du rejeu des messages stockés dans le fichier de livraison de contenu FLC et modifiés au cours de l'étape G16, le contenu requis est livré au terminal 10.

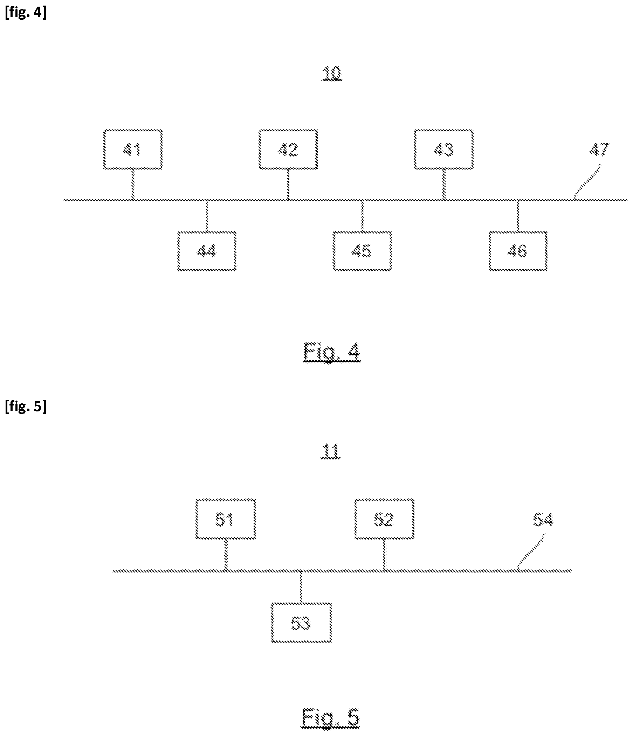

La **[****fig. 4****]** représente un terminal 10 selon un mode de réalisation de l'invention. Un tel terminal 10 est apte à mettre en oeuvre les différents modes de réalisation du procédé d'accès à au moins un contenu selon la figure 3.

Un terminal 10 peut comprendre au moins un processeur matériel 41, une unité de stockage 42, un dispositif de saisie 43, un dispositif d'affichage 44, une interface 45, et au moins une interface de réseau 46 qui sont connectés entre eux au travers d'un bus 47. Bien entendu, les éléments constitutifs du terminal 10 peuvent être connectés au moyen d'une connexion autre qu'un bus.

Le processeur 41 commande les opérations du terminal 10. L'unité de stockage 42 stocke au moins un programme pour la mise en oeuvre du procédé selon un mode de réalisation de l'invention à exécuter par le processeur 41, et diverses données, telles que des paramètres utilisés pour des calculs effectués par le processeur 41, des données intermédiaires de calculs effectués par le processeur 41, etc. Le processeur 41 peut être formé par tout matériel ou logiciel connu et approprié, ou par une combinaison de matériel et de logiciel. Par exemple, le processeur 41 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 42 peut être formée par n'importe quel moyen approprié capable de stocker le programme ou les programmes et des données d'une manière lisible par un ordinateur. Des exemples d'unité de stockage 42 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 43 peut être formé par un clavier, un dispositif de pointage tel qu'une souris à utiliser par un utilisateur pour entrer des commandes. Le dispositif d'affichage 34 peut être également formé par un module d'affichage, tel que par exemple une interface graphique utilisateur ou GUI (pour *Graphical User Interface*)*.*

L'interface 45 fournit une interface entre le terminal 10 et un autre équipement.

Au moins une interface réseau 46 fournit une connexion entre le terminal 10 et le serveur cache 11, et le serveur d'origine 12.

La **[****fig. 5****]** représente un serveur cache 11 apte à mettre en oeuvre les différents modes de réalisation du procédé de contrôle d'accès à un contenu selon la figure 3.

Un serveur cache 11 peut comprendre au moins un processeur matériel 51, une unité de stockage 52, et au moins une interface de réseau 53 qui sont connectés entre eux au travers d'un bus 54. Bien entendu, les éléments constitutifs du serveur cache 11 peuvent être connectés au moyen d'une connexion autre qu'un bus.

Le processeur 51 commande les opérations du serveur cache 11. L'unité de stockage 52 stocke au moins un programme pour la mise en oeuvre de la méthode selon un mode de réalisation à exécuter par le processeur 51, et diverses données, telles que des paramètres utilisés pour des calculs effectués par le processeur 51, des données intermédiaires de calculs effectués par le processeur 51, etc. Le processeur 51 peut être formé par tout matériel ou logiciel connu et approprié, ou par une combinaison de matériel et de logiciel. Par exemple, le processeur 51 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 52 peut être formée par n'importe quel moyen approprié capable de stocker le programme ou les programmes et des données d'une manière lisible par un ordinateur. Des exemples d'unité de stockage 52 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Au moins une interface réseau 53 fournit une connexion entre le serveur cache 11, le terminal 10 et le serveur d'origine 12.

## Revendications

1. Procédé d'accès à un contenu, ledit procédé étant mis en oeuvre par un terminal (10), dans un réseau de diffusion de contenu comprenant au moins ledit terminal, un serveur d'origine (12) et un serveur cache (11), le procédé comprenant :
une première phase comprenant les étapes suivantes de :
- émission (G7) d'une demande d'autorisation d'accès audit contenu à destination un serveur d'origine (12) associé audit contenu,
- réception (G9) d'un fichier (FAA) comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal (10) par le serveur d'origine (12),
une deuxième phase comprenant les étapes suivantes de :
- émission (G10) d'une demande d'accès audit contenu à destination d'un serveur dit cache (11) dans lequel ledit contenu est mémorisé,
- transmission (G11) du fichier (FAA) comprenant ladite autorisation d'accès à destination du serveur cache (11),
- réception (G15, G17) du contenu transmis par le serveur cache (11) lorsque l'authenticité du fichier (FAA) est vérifiée par le serveur cache (11).

2. Procédé d'accès à un contenu selon la revendication 1 dans lequel l'étape de réception du contenu consiste en un rejeu (G15, G17), avec ledit serveur cache (11), d'une séquence de messages échangés entre le serveur cache (11) et le serveur dit d'origine (12) au cours d'une session de communication établie entre le serveur cache (11) et le serveur d'origine (12) au cours de laquelle ledit contenu est délivré auprès du serveur cache (11), ladite séquence de messages ayant été enregistrée par ledit serveur cache (11).

3. Procédé d'accès à un contenu selon la revendication 1 dans lequel ladite autorisation d'accès a une durée de validité.

4. Procédé de contrôle d'accès à un contenu mémorisé dans un serveur dit cache (11) par au moins un terminal (10), dans un réseau de diffusion de contenu comprenant au moins ledit terminal, un serveur d'origine (12) et le serveur cache (11), ledit procédé étant mis en oeuvre par le serveur cache (11) et comprenant :
une première phase comprenant l'étape suivante de :
- réception (G2, G4) d'un premier fichier (FCA) comprenant des données de contrôle d'accès audit contenu délivré par un serveur dit d'origine (12) associé audit contenu,
une deuxième phase comprenant les étapes suivantes de :
- réception (G10) d'une demande d'accès audit contenu émise par ledit terminal (10),
- réception (G11) d'un deuxième fichier (FAA), transmis par le terminal (10) et comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal (10) par le serveur d'origine (12),
- vérification (G12) de l'authenticité du deuxième fichier (FAA) comprenant ladite autorisation d'accès audit contenu au moyen du premier fichier (FCA) comprenant des données de contrôle d'accès audit contenu,
- lorsque l'authenticité du deuxième fichier est vérifiée, livraison (G15, G17) du contenu audit terminal (10).

5. Procédé de contrôle d'accès à un contenu selon la revendication 4 dans lequel le premier fichier (FCA) comprend en outre un logiciel de traitement dudit deuxième fichier (FAA).

6. Procédé de contrôle d'accès à un contenu selon la revendication 4 comprenant une étape d'enregistrement (G4) d'une séquence de messages échangés entre le serveur cache (12) et le serveur d'origine (11) hébergeant le contenu au cours d'une session de communication établie avec le serveur d'origine (12) associé audit contenu et au cours de laquelle ledit contenu est livré au serveur cache (11).

7. Procédé de contrôle d'accès à un contenu selon la revendication 6 dans lequel le premier fichier (FCA) est livré au cours de ladite session de communication établie avec le serveur d'origine (12).

8. Procédé de contrôle d'accès à un contenu selon la revendication 6 comprenant une étape de rejeu (G15, G17), avec ledit au moins un terminal (10), de la séquence de messages enregistrée, résultant en la livraison dudit contenu.

9. Procédé de contrôle d'accès à un contenu selon la revendication 4 dans lequel le deuxième fichier (FAA) comprend une séquence de messages échangés entre le terminal (10) et le serveur d'origine (12) au cours d'une session de communication établie entre le terminal (10) et le serveur d'origine (12), au moins l'un des messages de ladite séquence de messages comprenant ladite autorisation d'accès audit contenu.

10. Terminal requérant un accès à un contenu, dans un réseau de diffusion de contenu comprenant au moins ledit terminal, un serveur d'origine (12) et un serveur cache (11), ledit terminal (10) comprenant des moyens pour :
- recevoir un fichier (FAA) comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal (10) par un serveur d'origine (12) associé audit contenu,
- émettre une demande d'accès audit contenu à destination d'un serveur dit cache (11) dans lequel ledit contenu est mémorisé,
- transmettre le fichier (FAA) comprenant ladite autorisation d'accès à destination du serveur cache (11),
- recevoir le contenu transmis par le serveur cache (11) lorsque l'authenticité du fichier (FAA) est vérifiée par le serveur cache (11).

11. Serveur dit cache (11) capable de contrôler un accès à un contenu mémorisé dans le serveur dit cache (11) par au moins un terminal (10), dans un réseau de diffusion de contenu comprenant au moins ledit terminal, un serveur d'origine (12) et le serveur cache (11), le serveur cache (11) comprenant des moyens pour :
- recevoir un premier fichier (FCA) comprenant des données de contrôle d'accès audit contenu délivré par un serveur dit d'origine (12) associé audit contenu,
- recevoir une demande d'accès audit contenu émise par ledit terminal (10),
- recevoir un deuxième fichier (FAA), transmis par le terminal (10) et comprenant une séquence de messages échangés entre le terminal (10) et le serveur d'origine (12) au cours d'une session de communication établie entre le terminal (10) et le serveur d'origine (12), au moins l'un des messages de ladite séquence de messages comprenant au moins une autorisation d'accès audit contenu délivrée audit terminal (10) par le serveur d'origine (12),
- vérifier l'authenticité du deuxième fichier (FAA) comprenant ladite autorisation d'accès audit contenu au moyen du premier fichier (FCA) comprenant des données de contrôle d'accès audit contenu,
- lorsque l'authenticité du deuxième fichier (FAA) est vérifiée, livrer le contenu audit terminal (10).

## Patentansprüche

1. Verfahren zum Zugriff auf einen Inhalt, wobei das Verfahren von einem Endgerät (10) in einem Content Delivery Network durchgeführt wird, das mindestens das Endgerät, einen Ursprungsserver (12) und einen Cache-Server (11) umfasst, wobei das Verfahren umfasst:
eine erste Phase, die die folgenden Schritte umfasst:
- Senden (G7) einer Anforderung zur Autorisierung des Zugriffs auf den Inhalt an einen Ursprungsserver (12),
der dem Inhalt zugeordnet ist,
- Empfangen (G9) einer Datei (FAA), die eine Sequenz aus Nachrichten umfasst, die zwischen dem Endgerät (10) und dem Ursprungsserver (12) während einer zwischen dem Endgerät (10) und dem Ursprungsserver (12) aufgebauten Kommunikationssitzung ausgetauscht werden, wobei mindestens eine der Nachrichten der Sequenz aus Nachrichten mindestens eine Autorisierung des Zugriffs auf den Inhalt umfasst, die dem Endgerät (10) vom den Ursprungsserver (12) erteilt wird,
eine zweite Phase, die die folgenden Schritte umfasst:
- Senden (G10) einer Anforderung des Zugriffs auf den Inhalt an einen sogenannten Cache-Server (11), in dem der Inhalt gespeichert ist,
- Übertragen (G11) der Datei (FAA), die die Autorisierung des Zugriffs umfasst, an den Cache-Server (11),
- Empfangen (G15, G17) des von dem Cache-Server (11) übertragenen Inhalts, wenn die Authentizität der Datei (FAA) von dem Cache-Server (11) verifiziert wird.

2. Verfahren zum Zugriff auf einen Inhalt nach Anspruch 1, wobei der Schritt des Empfangens des Inhalts in einem Wiederholen (G15, G17), mit dem Cache-Server (11), einer Sequenz aus Nachrichten besteht, die zwischen dem Cache-Server (11) und dem sogenannten Ursprungsserver (12) während einer zwischen dem Cache-Server (11) und dem Ursprungsserver (12) aufgebauten Kommunikationssitzung ausgetauscht werden, während der der Inhalt bei dem Cache-Server (11) bereitgestellt wird, wobei die Sequenz aus Nachrichten von dem Cache-Server (11) registriert worden ist.

3. Verfahren zum Zugriff auf einen Inhalt nach Anspruch 1, wobei die Autorisierung des Zugriffs eine Gültigkeitsdauer hat.

4. Verfahren zur Steuerung des Zugriffs auf einen in einem sogenannten Cache-Server (11) gespeicherten Inhalt durch mindestens ein Endgerät (10) in einem Content Delivery Network, das mindestens das Endgerät, einen Ursprungsserver (12) und den Cache-Server (11) umfasst, wobei das Verfahren von dem Cache-Server (11) durchgeführt wird und umfasst:
eine erste Phase, die den folgenden Schritt umfasst:
- Empfangen (G2, G4) einer ersten Datei (FCA), die Daten zur Steuerung des Zugriffs auf den Inhalt umfasst, der von einem sogenannten Ursprungsserver (12) bereitgestellt wird, der dem Inhalt zugeordnet ist, eine zweite Phase, die die folgenden Schritte umfasst:
- Empfangen (G10) einer Anforderung des Zugriffs auf den Inhalt, die von dem Endgerät (10) gesendet wird,
- Empfangen (G11) einer zweiten Datei (FAA), die von dem Endgerät (10) übertragen wird und eine Sequenz aus Nachrichten umfasst, die zwischen dem Endgerät (10) und dem Ursprungsserver (12) während einer zwischen dem Endgerät (10) und dem Ursprungsserver (12) aufgebauten Kommunikationssitzung ausgetauscht werden, wobei mindestens eine der Nachrichten der Sequenz aus Nachrichten mindestens eine Autorisierung des Zugriffs auf den Inhalt umfasst, die dem Endgerät (10) von dem Ursprungsserver (12) erteilt wird,
- Verifizieren (G12) der Authentizität der zweiten Datei (FAA), die die Autorisierung des Zugriffs auf den Inhalt umfasst, mittels der ersten Datei (FCA), die Daten zur Steuerung des Zugriffs auf den Inhalt umfasst,
- wenn die Authentizität der zweiten Datei verifiziert wird, Lieferung (G15, G17) des Inhalts an das Endgerät (10) .

5. Verfahren zur Steuerung des Zugriffs auf einen Inhalt nach Anspruch 4, wobei die erste Datei (FCA) ferner eine Software zur Verarbeitung der zweiten Datei (FAA) umfasst.

6. Verfahren zur Steuerung des Zugriffs auf einen Inhalt nach Anspruch 4, umfassend einen Schritt des Registrierens (G4) einer Sequenz aus Nachrichten, die zwischen dem Cache-Server (12) und dem den Inhalt hostenden Ursprungsserver (11) während einer Kommunikationssitzung ausgetauscht werden, die zu dem Ursprungsserver (12) aufgebaut ist, der dem Inhalt zugeordnet ist, und während der der Inhalt an den Cache-Server (11) geliefert wird.

7. Verfahren zur Steuerung des Zugriffs auf einen Inhalt nach Anspruch 6, wobei die erste Datei (FCA) während der zu dem Ursprungsserver (12) aufgebauten Kommunikationssitzung geliefert wird.

8. Verfahren zur Steuerung des Zugriffs auf einen Inhalt nach Anspruch 6, umfassend einen Schritt des Wiederholens (G15, G17), mit dem mindestens einen Endgerät (10), der registrierten Sequenz aus Nachrichten, was zu der Lieferung des Inhalts führt.

9. Verfahren zur Steuerung des Zugriffs auf einen Inhalt nach Anspruch 4, wobei die zweite Datei (FAA) eine Sequenz aus Nachrichten umfasst, die zwischen dem Endgerät (10) und dem Ursprungsserver (12) während einer zwischen dem Endgerät (10) und dem Ursprungsserver (12) aufgebauten Kommunikationssitzung ausgetauscht werden, wobei mindestens eine der Nachrichten der Sequenz aus Nachrichten die Autorisierung des Zugriffs auf den Inhalt umfasst.

10. Endgerät, das einen Zugriff auf einen Inhalt in einem Content Delivery Network anfordert, das mindestens das Endgerät, einen Ursprungsserver (12) und einen Cache-Server (11) umfasst, wobei das Endgerät (10) Mittel umfasst zum:
- Empfangen einer Datei (FAA), die eine Sequenz aus Nachrichten umfasst, die zwischen dem Endgerät (10) und dem Ursprungsserver (12) während einer zwischen dem Endgerät (10) und dem Ursprungsserver (12) aufgebauten Kommunikationssitzung ausgetauscht werden, wobei mindestens eine der Nachrichten der Sequenz aus Nachrichten mindestens eine Autorisierung des Zugriffs auf den Inhalt umfasst, die dem Endgerät (10) von einem Ursprungsserver (12) erteilt wird, der dem Inhalt zugeordnet ist,
- Senden einer Anforderung des Zugriffs auf den Inhalt an einen sogenannten Cache-Server (11), in dem der Inhalt gespeichert ist,
- Übertragen der Datei (FAA), die die Autorisierung des Zugriffs umfasst, an den Cache-Server (11),
- Empfangen des von dem Cache-Server (11) übertragenen Inhalts, wenn die Authentizität der Datei (FAA) von dem Cache-Server (11) verifiziert wird.

11. Server, Cache-Server (11) genannt, der in der Lage ist, einen Zugriff auf einen in dem sogenannten Cache-Server (11) gespeicherten Inhalt durch mindestens ein Endgerät (10) in einem Content Delivery Network zu steuern, das mindestens das Endgerät, einen Ursprungsserver (12) und den Cache-Server (11) umfasst, wobei der Cache-Server (11) Mittel umfasst zum:
- Empfangen einer ersten Datei (FCA), die Daten zur Steuerung des Zugriffs auf den Inhalt umfasst, der von einem sogenannten Ursprungsserver (12) bereitgestellt wird, der dem Inhalt zugeordnet ist,
- Empfangen einer Anforderung des Zugriffs auf den Inhalt, die von dem Endgerät (10) gesendet wird,
- Empfangen einer zweiten Datei (FAA), die von dem Endgerät (10) übertragen wird und eine Sequenz aus Nachrichten umfasst, die zwischen dem Endgerät (10) und dem Ursprungsserver (12) während einer zwischen dem Endgerät (10) und dem Ursprungsserver (12) aufgebauten Kommunikationssitzung ausgetauscht werden, wobei mindestens eine der Nachrichten der Sequenz aus Nachrichten mindestens eine Autorisierung des Zugriffs auf den Inhalt umfasst, die dem Endgerät (10) von dem Ursprungsserver (12) erteilt wird,
- Verifizieren der Authentizität der zweiten Datei (FAA), die die Autorisierung des Zugriffs auf den Inhalt umfasst, mittels der ersten Datei (FCA), die Daten zur Steuerung des Zugriffs auf den Inhalt umfasst,
- Liefern des Inhalts an das Endgerät (10), wenn die Authentizität der zweiten Datei (FAA) verifiziert wird.

## Claims

1. Method for accessing content, said method being implemented by a terminal (10), in a content delivery network comprising at least said terminal, an origin server (12) and a cache server (11), the method comprising:
a first phase comprising the following steps of:
- sending (G7) a request for authorization to access said content to an origin server (12) associated with said content,
- receiving (G9) a file (FAA) containing a sequence of messages exchanged between the terminal (10) and the origin server (12) in the course of a communication session set up between the terminal (10) and the origin server (12), at least one of the messages of said sequence of messages containing at least one authorization to access said content, delivered to said terminal (10) by the origin server (12),
a second phase comprising the following steps of:
- sending (G10) a request for access to said content to a so-called cache server (11) in which said content is stored,
- transmitting (G11) the file (FAA) containing said access authorization to the cache server (11),
- receiving (G15, G17) the content transmitted by the cache server (11) when the authenticity of the file (FAA) is verified by the cache server (11).

2. Method for accessing content according to Claim 1, wherein the step of receiving the content consists in replaying (G15, G17), with said cache server (11), a sequence of messages exchanged between the cache server (11) and the so-called origin server (12) in the course of a communication session set up between the cache server (11) and the origin server (12), in the course of which said content is delivered to the cache server (11), said sequence of messages having been recorded by said cache server (11).

3. Method for accessing content according to Claim 1, wherein said access authorization has a validity period.

4. Method for controlling access to content stored in a so-called cache server (11) by at least one terminal (10), in a content delivery network comprising at least said terminal, an origin server (12) and the cache server (11), said method being implemented by the cache server (11) and comprising:
a first phase comprising the following step of:
- receiving (G2, G4) a first file (FCA) containing data controlling access to said content delivered by a so-called origin server (12) associated with said content,
a second phase comprising the following steps of:
- receiving (G10) a request to access said content sent by said terminal (10),
- receiving (G11) a second file (FAA), transmitted by the terminal (10) and containing a sequence of messages exchanged between the terminal (10) and the origin server (12) in the course of a communication session set up between the terminal (10) and the origin server (12), at least one of the messages of said sequence of messages containing at least one authorization to access said content, delivered to said terminal (10) by the origin server (12),
- verifying (G12) the authenticity of the second file (FAA) containing said authorization to access said content by means of the first file (FCA) containing data controlling access to said content,
- when the authenticity of the second file is verified, delivering (G15, G17) the content to said terminal (10).

5. Method for controlling access to content according to Claim 4, wherein the first file (FCA) further comprises software for processing said second file (FAA).

6. Method for controlling access to content according to Claim 4, comprising a step of recording (G4) a sequence of messages exchanged between the cache server (12) and the origin server (11) hosting the content in the course of a communication session set up with the origin server (12) associated with said content and in the course of which said content is delivered to the cache server (11).

7. Method for controlling access to content according to Claim 6, wherein the first file (FCA) is delivered in the course of said communication session set up with the origin server (12).

8. Method for controlling access to content according to Claim 6, comprising a step of replaying (G15, G17), with said at least one terminal (10), the recorded sequence of messages, resulting in delivery of said content.

9. Method for controlling access to content according to Claim 4, wherein the second file (FAA) contains a sequence of messages exchanged between the terminal (10) and the origin server (12) in the course of a communication session set up between the terminal (10) and the origin server (12), at least one of the messages of said sequence of messages containing said authorization to access said content.

10. Terminal requesting access to content, in a content delivery network comprising at least said terminal, an origin server (12) and a cache server (11), said terminal (10) comprising means for:
- receiving a file (FAA) containing a sequence of messages exchanged between the terminal (10) and the origin server (12) in the course of a communication session set up between the terminal (10) and the origin server (12), at least one of the messages of said sequence of messages containing at least one authorization to access said content, delivered to said terminal (10) by an origin server (12) associated with said content,
- sending a request for access to said content to a so-called cache server (11) in which said content is stored,
- transmitting the file (FAA) containing said access authorization to the cache server (11),
- receiving the content transmitted by the cache server (11) when the authenticity of the file (FAA) is verified by the cache server (11).

11. So-called cache server (11) capable of controlling access to content stored in the so-called cache server (11) by at least one terminal (10), in a content delivery network comprising at least said terminal, an origin server (12) and the cache server (11), the cache server (11) comprising means for:
- receiving a first file (FCA) containing data controlling access to said content delivered by a so-called origin server (12) associated with said content,
- receiving a request to access said content sent by said terminal (10),
- receiving a second file (FAA), transmitted by the terminal (10) and containing a sequence of messages exchanged between the terminal (10) and the origin server (12) in the course of a communication session set up between the terminal (10) and the origin server (12), at least one of the messages of said sequence of messages containing at least one authorization to access said content, delivered to said terminal (10) by the origin server (12),
- verifying the authenticity of the second file (FAA) containing said authorization to access said content by means of the first file (FCA) containing data controlling access to said content,
- when the authenticity of the second file (FAA) is verified, delivering the content to said terminal (10).
